# EUROPEAN PATENT APPLICATION

(11) **EP 4 647 808 A1**
(43) Date of publication of application: **12.11.2025**
(21) Application number: 24175176.7
(22) Date of filing: 10.05.2024
(51) Int. Cl.: G01S 13/86, G01S 13/931, G01S 7/02, G01S 7/03

(54) **SENSOR SYSTEM**

(71) Applicant: Aptiv Technologies AG, 8200 Schaffhausen (CH)
(72) Inventor: Bornemann, Martin, 90489 Nürnberg (DE); Vinci, Gabor, 90763 Fürth (DE); Leonardi, Roberto, 90403 Nürnberg (DE); Talai, Armin, 90431 Nürnberg (DE)
(74) Representative: Lewis Silkin LLP

(57) **Abstract**

A sensor system comprised an optical sensor and at least one radar device which includes a radar operation unit configured to generate radar waves to be transmitted and/or to detect radar waves, and which includes an antenna element configured to transmit radar waves generated by the radar operation unit to an exterior of the sensor system and/or to receive radar waves from the exterior of the sensor system which are to be detected by the radar operation unit. The antenna element is directly attached to the radar operation unit.

## Description

### FIELD

The present disclosure relates to a sensor system which includes an optical sensor and at least one a radar device, and to a vehicle comprising such a sensor system.

### BACKGROUND

For monitoring a predefined spatial region, camera systems or ultrasonic sensors are usually applied. For example, a vehicle like a passenger car may be equipped with a certain number of ultrasonic sensors and/or camera systems in order to provide a parking distance control, i.e. for supporting a driver when parking the vehicle or for automatic parking. However, ultrasonic systems are expensive, and a big number of ultrasonic sensors and camera systems may be required e.g. at a vehicle for covering the desired spatial region.

On the other hand, the use of radar systems has also been considered for parking applications. For vehicles, however, the radar systems are mostly restricted to traditional installation locations. For example, a bumper may be provided with corner radar systems, front radar systems may be provided in a front grill and/or in or below the bumper, and side radar systems may be installed at a B-pillar. Therefore, a combination of radar systems with other types of sensors, like a camera system, is usually not considered in vehicles due to their different installation requirements.

Accordingly, there is a need to have a sensor system which requires little installation space and at the same time allows for a reliable surveillance of a spatial region.

### SUMMARY

The present disclosure provides a sensor system and a vehicle according to the independent claims. Embodiments are given in the subclaims, the description and the drawings.

In one aspect, the present disclosure is directed at a sensor system comprising an optical sensor and at least one radar device which includes a radar operation unit configured to generate radar waves to be transmitted and/or to detect radar waves, and which includes an antenna element configured to transmit radar waves generated by the radar operation unit to an exterior of the sensor system and/or to receive radar waves from the exterior of the sensor system which are to be detected by the radar operation unit. The antenna element is directly attached to the radar operation unit.

The optical sensor may be configured to detect light in the visible range and/or in the infrared range of the electromagnetic spectrum in order to provide an image or a sequence of images related to the exterior, i.e. an external environment, of the sensor system. Therefore, the optical sensor is configured to monitor one or more objects in the external environment of the sensor system.

For providing the images or sequences of images, the optical sensor may include an imaging device and a detection device. The imaging device may include an objective, i.e. one or more object lenses. The detection device may include semiconducting detection units like chip of a charge coupled device (CCD) comprising a predefined number of pixels. Therefore, the optical sensor may be able to convert the detected light into electric signals which may be output by the sensor system and which may provide the image or sequence of images of the external environment of the sensor system for one or more points in time.

If the sensor system includes one radar device only, the radar operation unit of the radar device may be configured to generate radar waves to be transmitted and to detect radar waves, while the corresponding antenna element may be configured to transmit the radar waves to the exterior of the sensor system and to receive radar waves from the exterior of the sensor system which are to be detected by the radar operation unit. Alternatively, such a single radar device, i.e. its radar operation unit and its antenna element, may also be configured to transmit or to receive radar waves only, i.e. as a minimal arrangement. In this case, however, a further external device may be required for receiving or for transmitting radar waves, respectively.

If the sensor system includes more than one radar device, at least one of the radar operation units of the radar devices may be configured to generate radar waves to be transmitted, and the corresponding antenna element of the same radar device may be configured to transmit the radar waves to the exterior of the sensor system, while at least one other of the radar operation units of the radar devices may be configured to detect radar waves which are received by the corresponding antenna element of the same radar device. In case that the sensor system includes at least two radar devices, at least one radar device may therefore be configured as a transmitting (Tx) device only, while at least one other radar device may be configured as a receiving (Rx) device only. However, the radar devices may also have a transmitting capability and a receiving capability at the same time, and a suitable arrangement of the radar devices may be able to provide additional virtual channels, i.e. in addition to the Tx and Rx channels provided directly by the respective radar devices.

The radar operation unit of the at least on radar device may be able to generate radar waves e.g. in a frequency range of about 76 to 81 GHz. As an alternative, a frequency range above 100 GHz may be generated by the radar operation unit. Conversely, the radar operation unit may also be configured to receive the radar waves having frequencies in such frequency ranges, e.g. in a predefined range at approximately 76 to 81 GHz or above 100 GHz. The radar device may also be configured to monitor one or more objects in the external environment of the sensor system, i.e. in addition to the optical sensor.

Since the sensor system comprises an optical sensor and the at least one radar device, the optical sensor and the one or more radar devices may supplement each other when monitoring the external environment of the sensor system. For example, the radar device may be able to detect objects in the dark, i.e. at night, when the intensity of light may be too low for the optical sensor to monitor objects reliably. In addition, the instrumental field of view of the optical sensor and the at least one radar device may be different. For example, the respective radar device may have a wide field of view with respect to an elevation and an azimuth direction which may cover approximately 150 degrees in the respective direction.

Since the antenna element is directly attached to the radar operation unit for the at least one radar device, the respective radar device is a compact unit and little installation space is required for the one or more radar devices. For example, the dimensions of the sensor system may be almost the same as for a known purely optical sensor or small camera even if one or more radar devices are installed in a narrow space close to the optical sensor.

In addition, the small spatial dimensions of the at least one radar device may allow for a flexible arrangement and alignment of the one or more radar devices in the vicinity of the optical sensor. Moreover, no devices or elements are required for transferring radar waves between the antenna element and radar operation unit due to their direct attachment to each other. This may exclude disturbances being caused by such transfer devices or elements.

The sensor system may altogether be provided with a small footprint which may allow a flexible installation of the sensor system e.g. at different locations on a vehicle like a passenger car. Furthermore, the sensor system may also be suitable for the surveillance of closed rooms, e.g. in buildings. Due to the one or more radar devices, no external light source may be required for the operation of the sensor system when performing such a surveillance task.

According to an embodiment, the optical sensor may include an imaging device having an end which may face the exterior of the sensor system and which may define a front side of the sensor system. The at least one radar device may be located at the front side of the sensor system.

Therefore, the optical sensor and the at least one radar device may face the same region of the external environment of the sensor system. Accordingly, the instrumental field of view of the optical sensor and the instrumental field of view of the at least one radar device may overlap.

For example, the total instrumental field of view provided by the one or more radar devices may cover the instrumental field of view of the optical sensor entirely. Therefore, the optical sensor and the one or more radar devices may supplement each other with respect to their instrumental field of view when surveilling a certain predefined region within the external environment of the sensor system.

The imaging device may include at least one lens. The optical sensor may therefore be configured as a camera system in which one or more objective lenses may generate an image of the external environment of the sensor system, e.g. at a detection device of the optical sensor.

According to a further embodiment, the radar operation unit may include a radar chip and a primary printed circuit board (PCB). Such a printed circuit board for the radar operation unit may have small dimensions, i.e. smaller dimensions than further printed circuit boards provided e.g. for the optical sensor. The radar chip may be configured to generate the radar waves to be transmitted by the antenna element and to detect the radar waves received by the antenna element. The primary printed circuit board may include electronic elements for controlling the operation of the radar chip and the antenna element.

The antenna element and the radar chip of the at least one radar device may constitute a compact unit referred to as antenna-in-package (AIP). This compact unit may be mounted directly at the small printed circuit board, i.e. in a similar manner as a standard chip being connected to a printed circuit board.

The respective antenna element of the at least one radar device may be aligned with an optical axis of the optical sensor. In other words, an instrumental field of view of the one or more radar devices and a radar lobe of the respective antenna element may be centered with respect to a line being in parallel to the optical axis of the optical sensor. The respective center line of the instrumental field of view and of the radar lobe of the respective radar device may therefore be aligned with the optical axis of the optical sensor. This may ensure that the one or more radar devices cover the instrumental field of view of the optical sensor entirely in order to supplement the optical sensor when performing the surveillance task of a certain region in the exterior of the sensor system.

According to a further embodiment, the sensor system may include a plurality of radar devices surrounding the optical sensor. For example, the plurality of radar devices may surround an imaging device of the optical sensor at a front side of the optical sensor. For example, the sensor system may include at least eight radar devices. Moreover, the respective radar devices of such a plurality of radar devices may be spaced apart at equidistant angles within a front plane of the sensor system. The front plane may extend at the front side of the sensor system perpendicularly to the optical axis of the optical sensor.

By such a plurality of radar devices, the entire instrumental field of view provided by the plurality of radar devices may be optimized and adapted to the specific surveillance task. In addition, the plurality of radar devices may allow for a specific and flexible alignment of the respective radar devices with respect to the optical sensors.

Moreover, the plurality of radar devices surrounding the optical sensor may be arranged, e.g. at a front side of the sensor system, in a flexible manner in accordance with external requirements provided for the sensor system, e.g. regarding the coverage of a certain region within the environment of the sensor system. Furthermore, the radar devices may be arranged in such a manner that the principles of the multiple-input multiple output (MIMO) technology may be applied, e.g. regarding virtual Tx and/or Rx channels.

According to a further embodiment, the optical sensor may include a detection device being connected to a secondary printed circuit board. The radar operation unit of the at least one radar device may be connected to the secondary printed circuit board. The connection of the radar operation unit and the secondary printed circuit board may be provided by a flexible cable. Such a flexible cable may allow for a flexible arrangement and alignment of the one or more radar devices with respect to the optical sensor. Alternatively, the connection of the radar operation unit and the secondary printed circuit board may be provided by a board-to-board connector.

Such connections between the radar operation unit and the secondary printed circuit board may require little installation space. Due to this, the sensor system may still have a compact design although each of the one or more radar devices may be configured as an independent unit. That is, the secondary printed circuit board may be free of any devices or elements for controlling the operation of the respective radar devices.

However, the secondary printed circuit board may be configured to receive respective output data of the one or more radar devices for further processing. The secondary printed circuit board may be therefore be configured to provide a common data set which may include a fused output of the optical sensor and of the at least one radar device. Such a common data set may simplify the processing of the data provided by the sensor system, e.g. by further systems of a vehicle.

The radar chip, the first printed circuit board and second printed circuit board may comprise a processing unit, at least one memory unit and at least one non-transitory data storage. The non-transitory data storage and/or the memory unit may comprise a computer program for instructing the computer to perform several or all steps or aspects for processing data provided by the optical sensor and the radar transceiver unit described herein.

The non-transitory data storage and/or the memory unit may further include a computer readable medium which may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The sensor system may further comprise a common housing which may enclose the optical sensor and the at least one radar device. Such a common housing may enclose the components of the sensor system except for openings provided for an imaging device of the optical sensor, e.g. for a front lens, and for one or more openings for the respective antenna elements of the one or more radar devices. By such openings, the sensor system may be able to interact with its external environment, i.e. by transmitting radar waves into this external environment and by receiving light and radar waves from the external environment. Due to the common housing enclosing all components of the sensor system, the sensor system may be a compact unit which may allow for a flexible installation, e.g. at different locations on a vehicle. Therefore, the sensor system may be a cost-effective and flexible solution for the task of monitoring a special region close to a vehicle or within a closed room of a building.

In addition, one or more areas at a front side of the sensor system at which the respective antenna element of the one or more radar devices faces the exterior of the sensor system may be covered by a radome. By such a radome, the respective antenna element may be protected from influences from the exterior. Moreover, the radar lobe transmitted by the respective antenna element may be adapted by the radome to a desired shape.

In another aspect, the present disclosure is directed at a vehicle comprising a sensor system as described above.

According to an embodiment of the vehicle, a number and a respective position of one or more radar devices included by the sensor system may be selected in accordance with a desired position of the radar system at the vehicle. For example, when designing the vehicle, a certain spatial region may be predefined which is to be monitored by the sensor system. In accordance with such a predefined spatial region, a desired instrumental field of view may be defined for the sensor system, and the respective position of the radar devices with respect to the optical sensor and the number of radar devices required may be determined. Due to the flexible selection of the number and the respective positions of the radar devices within the sensor system, a flexible adaptation of the sensor system to the desired position and the desired task of the sensor system within the vehicle may be provided.

### DRAWINGS

Exemplary embodiments and functions of the present disclosure are described herein in conjunction with the following drawings, showing schematically:
- Fig. 1: a front view of a sensor system according to the disclosure;
- Fig. 2: a cross-sectional view of the sensor system as shown in Fig. 1; and
- Fig. 3: a vehicle including the sensor system as shown in Figs. 1 and 2.

### DETAILED DESCRIPTION

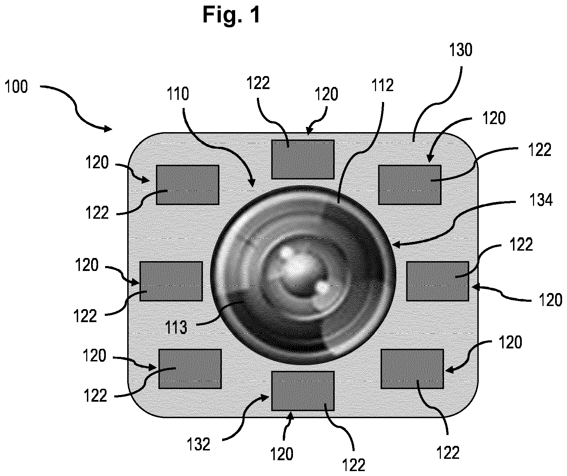

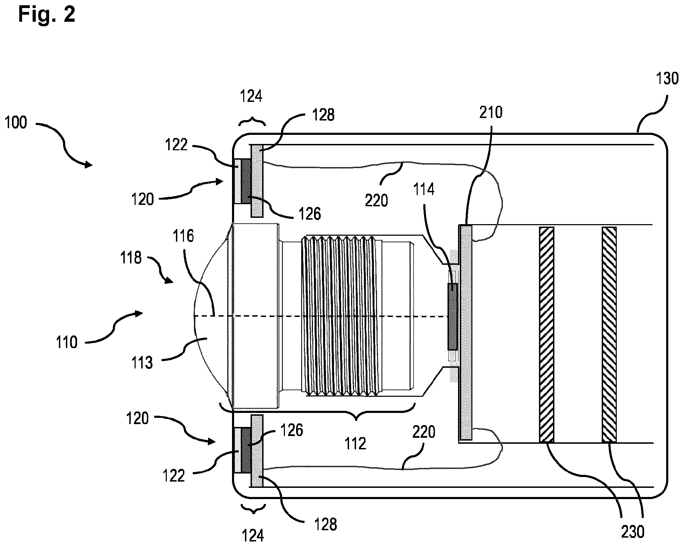

Fig. 1 schematically depicts a front view of a sensor system 100 which includes an optical sensor 110 and eight radar devices 120 which surround the optical sensor 110. The optical sensor 110 is configured as a camera and includes an imaging device 112 configured as a camera lens assembly which includes objective lenses. In Figs. 1 and 2, a front lens 113 of the camera lens assembly is shown. Each of the radar devices 120 includes a respective antenna element 122 and a radar operation unit 124 (see Fig. 2). The respective antenna element 122 is embedded in a so-called antenna-in-package (AIP) configuration in which the antenna element 122 is directly attached to the corresponding radar operation unit 124. The antenna elements 122 of four of the eight radar devices 120 are configured as transmitting or Tx antennas, whereas the other four of the eight radar devices 120 are configured as receiving or Rx antennas.

The radar operation unit 124 includes a radar chip 126 (see Fig. 2) which is mounted at a respective primary printed circuit board (PCB) or radar printed circuit board 128. The antenna-in-package (AIP) configuration therefore includes the respective antenna element 122 and the respective radar chip 126, whereas the radar operation unit 124 includes the radar chip 126 together with the radar printed circuit board (radar PCB) 128.

The sensor system 100 includes a common housing 130 which encloses the optical sensor 110 and the eight radar devices 120. The housing 130 includes small openings 132, in each of which a respective antenna element 122 is arranged. For sake of clarity, one of the small opening 132 is denoted in Fig. 1. However, the respective antenna element 122 of all of the eight radar devices 120 as shown in Fig. 1 are arranged in such a small opening 132 of the housing 130. Moreover, the housing 130 includes a large opening 134 for the first or front lens 113 of the imaging device 112 of the optical sensor 110.

Fig. 2 schematically depicts a cross-sectional side view of the sensor system 100. In addition to the imaging device or camera lens assembly 112, the optical sensor 110 includes a detection device or camera chip 114. That is, the imaging device or camera lens assembly 112 is configured to provide an image from an exterior of the sensor system 100 at a surface of the detection device 114. The detection device 114 includes a plurality of pixels, for example, and is configured as a semiconductor device like a charge-coupled device (CCD) for transforming the light entering the detection device 114 into electrical signals.

A center line of the optical sensor 110 is also depicted in Fig. 2. This center line constitutes an optical axis 116 for the imaging within the optical sensor 110. The imaging device or camera lens assembly 112 has an outer surface, i.e. as an outer surface of the first or front lens 113, which defines a front side 118 of the optical sensor 110 and of the entire sensor system 100.

The eight radar devices 120 (see Fig. 1) are located at the front side 118 of the optical sensor 110. In detail, as shown in Fig. 2, the respective antenna element 122 and the radar operation unit 124 of the respective radar devices 120 are located close to the front side 118 of the imaging device or camera lens assembly 112. Moreover, a respective center line of an instrumental field of view of the respective antenna element 122 is aligned with the optical axis 116 of the optical sensor 110. That is, the respective center line of the field of view of the respective antenna element 122 extends in parallel to the optical axis 116. Therefore, the optical sensor 110 and the eight radar devices 120 are facing the same direction with respect to the housing 130 of the sensor system 100.

Due to the arrangement close to the front side 118 of the sensor system 100 and due to the antenna-in-package configuration of the respective antenna element 122 and the respective radar chip 126, the radar devices 120 require a small installation space only which facilitates the integration of the radar devices 120 in the common housing 130. For example, the housing 130 may be originally designed for the optical sensor 110 only, and the radar devices 120 may be integrated thereafter.

The respective primary printed circuit board 128 of the eight radar devices 120 is connected to a secondary printed circuit board 210 via a flexible cable 220. The dimensions of the respective primary printed circuit board 128 are smaller than the dimensions of the secondary printed circuit board 210, and the extension of the respective primary printed circuit board 128 in a direction perpendicular to the optical axis 116 is less than half of the extension of the secondary printed circuit board 210 in this direction. The flexible cable 220 provides the power supply for the respective radar devices 120 and is used for transferring the input and output data between the respective radar devices 120 and the secondary printed circuit board 210.

The detection device 114 of the optical sensor 110 is mounted at the secondary printed circuit board 210 which may also be denoted as camera PCB 210. The secondary printed circuit board 210 is further provided with connections and/or communication devices like further cables etc. (not shown) in order to provide a common data set or common signal including a fused output of the detection device 114 of the optical sensor 110 and of the eight radar devices 120 for further processing.

In order to process such a common data set or signal, the sensor system 110 further includes additional printed circuit boards 230. In Fig. 2, two additional printed circuit boards 230 are shown although the sensor system 100 may also include one of these additional printed circuit boards 230 only or more than two additional printed circuit boards 230. The additional circuit boards 230 may be configured to acquire the common data set of the detection device 114 of the optical sensor 110 and of the eight radar devices 120. Moreover, the additional printed circuit boards 320 may be configured to process these signals in order to provide output signals our output data of the entire sensor system 100 such that these output signals or output data are suitable for further applications, e.g. within a vehicle provided with the sensor system 100.

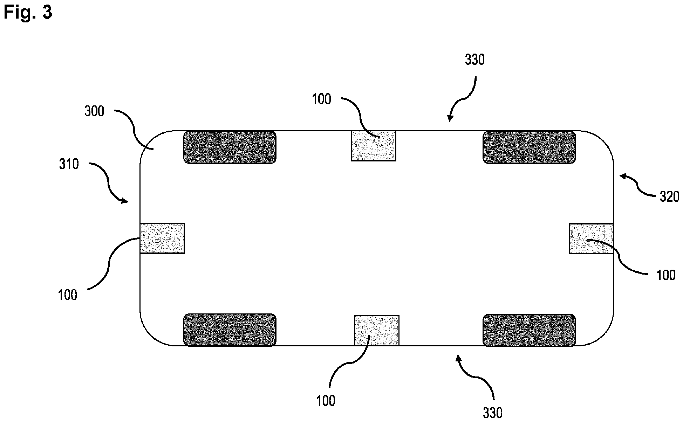

Fig. 3 schematically depicts a vehicle 300 which includes four sensor systems 100 as described above in context of Figs. 1 and 2. In detail, one of the four sensor systems 100 including the optical sensor 110 and a plurality of radar devices 120 is mounted at a front 310 of the vehicle 300, whereas a second one of the four sensor systems 100 is mounted at a rear 320 of the vehicle 300. In addition, two sensor systems 100 are mounted at a respective side 330 of the vehicle 300. These sensor systems 100 located at the respective sides 330 of the vehicle 300 are used as park sensors.

By providing four sensor systems 100 including a respective optical sensor 110 and a plurality of radar device 120 at the vehicle 300, the entire surrounding of the vehicle 300 can be monitored properly. That is, the four sensor systems 100 may be able to replace e.g. sixteen ultrasonic sensors which are usually required in order to cover the entire surrounding of the vehicle 300.

Although eight radar devices 120 are shown in Fig. 1 which surround the optical sensor 110 within the respective sensor system 100, the total number, the respective mounting position and the respective alignment of the radar devices 120 with respect to the optical sensor 110 may be adapted to the respective application of the sensor system 100, e.g. within the vehicle 300. For example, the number, the respective position location and the respective alignment of the radar device 120 may be selected in accordance with a desired region to be covered by the radar devices 120 of the respective sensor system 100.

According to the disclosure, a sensor system may comprise an optical sensor, at least one radar device including a radar operation unit configured to generate radar waves to be transmitted and/or to detect radar waves, and an antenna element configured to transmit radar waves generated by the radar operation unit to an exterior of the sensor system and/or to receive radar waves from the exterior of the sensor system which are to be detected by the radar operation unit. The antenna element may be directly attached to the radar operation unit.

According to various embodiments, the optical sensor may include an imaging device having an end which faces the exterior of the sensor system and which may define a front side of the sensor system. The at least one radar device may be located at the front side of the sensor system.

According to various embodiments, the imaging device may include at least one lens.

According to various embodiments, the radar operation unit may include a radar chip and a primary printed circuit board.

According to various embodiments, the antenna element of the at least one radar device may be aligned with an optical axis of the optical sensor.

According to various embodiments, the sensor system may include a plurality of radar devices surrounding the optical sensor.

According to various embodiments, the sensor system may include at least eight radar devices.

According to various embodiments, the radar devices may be are spaced apart at equidistant angles within a front plane of the sensor system.

According to various embodiments, the optical sensor may include a detection device being connected to a secondary printed circuit board, and the radar operation unit of the at least one radar device may be connected to the secondary printed circuit board.

According to various embodiments, the connection of the radar operation unit and the secondary printed circuit board may be provided by a flexible cable.

According to various embodiments, the connection of the radar operation unit and the secondary printed circuit board may be provided by a board-to-board connector.

According to various embodiments, the secondary printed circuit board may be configured to provide a common data set which may include a fused output of the optical sensor and of the at least one radar device.

According to various embodiments, the sensor system may further comprise a common housing which may enclose the optical sensor and the at least one radar device.

According to the disclosure, a vehicle may comprise at least one sensor system as described above.

According to various embodiments, a number and a respective position of one or more radar devices included by the sensor system may be selected in accordance with a desired position of the sensor system at the vehicle.

### Reference numeral list

- 100: sensor system
- 110: optical sensor
- 112: imaging device, camera lens assembly
- 113: front lens
- 114: detection device
- 116: optical axis
- 118: front side of the optical sensor
- 120: radar device
- 122: antenna element
- 124: radar operation unit
- 126: radar chip
- 128: primary printed circuit board or radar PCB
- 130: housing
- 132: small opening
- 134: large opening
- 210: secondary printed circuit board or camera PCB
- 220: flexible cable
- 230: additional printed circuit board
- 300: vehicle
- 310: front of the vehicle
- 320: rear of the vehicle
- 330: side of the vehicle

## Claims

1. Sensor system (100), comprising:
an optical sensor (110),
at least one radar device (120) including:
a radar operation unit (124) configured to generate radar waves to be transmitted and/or to detect radar waves, and
an antenna element (122) configured to transmit radar waves generated by the radar operation unit (124) to an exterior of the sensor system (100) and/or to receive radar waves from the exterior of the sensor system (100) which are to be detected by the radar operation unit (124),
wherein the antenna element (122) is directly attached to the radar operation unit (124).

2. Sensor system (100) according to claim 1, wherein
the optical sensor (110) includes an imaging device (112) having an end which faces the exterior of the sensor system (100) and which defines a front side (118) of the sensor system (100), and
the at least one radar device (120) is located at the front side (118) of the sensor system (100).

3. Sensor system (100) according to claim 2, wherein
the imaging device (112) includes at least one lens (113).

4. Sensor system (100) according to any one of claims 1 to 3, wherein
the radar operation unit (124) includes a radar chip (126) and a primary printed circuit board (128).

5. Sensor system (100) according to any one of claims 1 to 4, wherein
the antenna element (122) of the at least one radar device (120) is aligned with an optical axis (116) of the optical sensor (110).

6. Sensor system (100) according to any one of claims 1 to 5, wherein
the sensor system (100) includes a plurality of radar devices (120) surrounding the optical sensor (110).

7. Sensor system (100) according to claim 6, wherein
the sensor system (100) includes at least eight radar devices (120).

8. Sensor system (100) according to claim 6 or 7, wherein.
the radar devices (120) are spaced apart at equidistant angles within a front plane of the sensor system (100).

9. Sensor system (100) according to any one of claims 1 to 8, wherein
the optical sensor (110) includes a detection device (114) being connected to a secondary printed circuit board (210), and
the radar operation unit (124) of the at least one radar device (120) is connected to the secondary printed circuit board (210).

10. Sensor system (100) according to claim 9, wherein
the connection of the radar operation unit (124) and the secondary printed circuit board (210) is provided by a flexible cable (220).

11. Sensor system (100) according to claim 9, wherein
the connection of the radar operation unit (124) and the secondary printed circuit board (210) is provided by a board-to-board connector.

12. Sensor system (100) according to any one of claims 9 to 11, wherein
the secondary printed circuit board (210) is configured to provide a common data set which includes a fused output of the optical sensor (110) and of the at least one radar device (120).

13. Sensor system (100) according to any one of claims 1 to 12, wherein
the sensor system (100) further comprises a common housing (130) which encloses the optical sensor (110) and the at least one radar device (120).

14. Vehicle (300) comprising at least one sensor system (100) according to any one of claims 1 to 13.

15. Vehicle (300) according to claim 14, wherein
a number and a respective position of one or more radar devices (120) included by the sensor system (100) are selected in accordance with a desired position of the sensor system (100) at the vehicle (300).
